# EUROPÄISCHE PATENTSCHRIFT

(11) **EP 0 481 260 B1**
(45) Veröffentlichungstag und Bekanntmachung des Hinweises auf die Patenterteilung: **28.02.1996**
(21) Anmeldenummer: 91116400.2
(22) Anmeldetag: 26.09.1991
(51) Int. Cl.: F16B 13/14, E04B 1/61, E04B 2/82, E06B 9/171, F16B 3/00, F16B 5/06

(54) **Leistenförmiges Element zum Verankern von mit diesem vereinigbaren Wandteilen in der hinterschnittenen, einen Öffnungsschlitz aufweisenden Längsnut eines Aufnahmeteils**
Element forming a guiding strip to fix together wall parts connectable by said element in the recessed longitudinal channel of an anchoring part which presents an open slit
Elément en forme de languette de guidage pour la fixation de parties de murs assemblables entre eux par celui-ci dans la rainure longitudinale évidée d'une partie d'attache présentant une fente ouverte

(30) Priorität: 16.10.1990 DE 4032807
(43) Veröffentlichungstag der Anmeldung: 22.04.1992
(73) Patentinhaber: IVERA H.-P. RÜCK, TEXTILHANDEL-UND VERARBEITUNG, GmbH, D-73230 Kirchheim (DE)
(72) Erfinder: Rück, Hans-Peter, W-7312 Kirchheim-Teck (DE)

(56) Entgegenhaltungen:
- EP-A- 0 189 530
- DE-A- 1 625 462
- DE-C- 3 439 921
- US-A- 3 505 772

## Beschreibung

### Leistenförmiges, mit einem eine hinterschnittene Längsnut aufweisenden Aufnahmeteil kombinierbares Element

Die Erfindung bezieht sich auf ein leistenförmiges Element gemäß dem Oberbegriff des Anspruchs 1.

Ein derartiges, durch die EP 01 89 530 A2 bekanntes Element besteht aus einem als Hohlprofilkörper ausgebildeten Kopfteil und aus einem mit diesem vereinigbaren, an seinem rückwärtigen Bereich eine keilartige, hinterschnittene Erweiterung enthaltenden Heckteil. Der heckseitig gelegene Teil des Kopfteils weist dabei einen Einführungsschlitz auf, der durch von Seitenwandungen des Kopfteils nach innen ragende, einander gegenüberliegende Wandungsteile gebildet ist. Im montierten Zustand des Elements weitet die rückwärtige Erweiterung des Heckteils das Kopfteil im Bereich dessen Einführschlitzes auf, wobei die Hinterschneidungen der rückwärtigen Erweiterung des Heckteils von den beiden den Einführschlitz begrenzenden Wandungen hinterfaßt werden. Die einander gegenüberliegenden Wandungsteile des Kopfteils kommen dabei zur Anlage an die Innenseiten der Längsnut des Aufnahmeteils, wodurch das Element gegen Herausziehen aus dem Öffnungsschlitz der Längsnut des Aufnahmeteils gesichert ist.

Die Herstellung eines solchen Elements ist verhältnismässig aufwendig.

Durch das DE-GM 69 28 247 ist eine Klemmhalterung an Möbeln bekannt, die aus hinterschnittenen Nuten und abnehmbaren Leisten besteht, wobei die Leisten Klemmprofile mit zusammendrückbaren Schenkeln aufweisen, die in die hinterschnittenen Nuten hineingedrückt werden.

Zum lösbaren Verbinden zweier senkrecht aufeinanderstehender Platten aus Kunststoff, zum Beispiel von mit Leiterbahnen bedruckten Schaltungsplatten, ist es durch die DE-A 16 25 462 bekannt, die eine Platte mit zwei pilzförmigen Zapfen zu versehen, die in zwei rechteckige, schräg zur Achse stehende Durchbrüche der anderen Platte durch elastisches Verformen ihrer Schäfte eingesetzt werden, wobei die Unterseiten der Pilzköpfe nach Zurückfedern der Schäfte in ihre Ausgangslage die schrägen Rechteckdurchbrüche hintergreifend die Platten formschlüssig verriegelt halten. Abgesehen davon, daß hierbei das Problem des Verankerns eines leistenförmigen Elements in der hinterschnittenen Längsnut eines langestreckten Aufnahmeteils nicht auftritt, schließt die formschlüssige Verriegelung der beiden Platten deren Relativverschiebung zueinander aus.

Der Erfindung liegt die Aufgabe zugrunde, ein kostengünstiges leistenförmiges Element zum sicheren Verankern in der hinterschnittenen, durch einen Öffnungsschlitz zugängigen Längsnut eines langgestreckten Aufnahmeteils zu schaffen, wobei die Höhe des Öffnungsschlitzes kleiner bemessen ist als die Höhe bzw. Stärke der Frontseite des leistenförmigen Elements und wobei das leistenförmige Element in der Verankerungslage in Richtung der Längsachse des Aufnahmeteils verschiebbar ist. Diese Aufgabe ist durch ein leistenförmiges Element gemäß dem Oberbegriff des Patentanspruchs 1 mit den erfindungsgemäßen Merkmalen im kennzeichnenden Teil dieses Anspruchs gelöst. Ein gemäß dieser Lösung ausgestaltetes Element ist mit einem Geringstmaß an Aufwand herstellbar und ermöglicht auf einfache Weise eine rasche und sichere Kombination mit dem Aufnahmeteil. Mit dem leistenförmigen Element ist je nach Bedarf eine Materialbahn aus verformbarem Flachmaterial oder aus festem Material vereinigbar.

Weiterbildungen und zweckmäßige Ausgestaltungen der Erfindung sind Gegenstand der Unteransprüche.

Die Erfindung wird im nachstehenden anhand der Zeichnung erläutert.

Es zeigen:
- Fig.1: eine Draufsicht auf ein an seiner Frontseite mit diskreten, scheibenförmigen Zungen versehenes leistenförmiges Element,
- Fig.2: eine Ansicht des Elements gemäß Fig.1 in Richtung A,
- Fig. 3: eine perspektivische Teilansicht eines leistenförmigen Elements,
- Fig. 4: eine Teilansicht eines Elements gemäß den Figuren 1 bis 3 mit in die Einschubposition verschwenkten bzw. ausgelenkten Zungen in Zuordnung zu einem Abschnitt eines Aufnahmeteils,
- Fig. 5: eine Seitenansicht des Aufnahmeteils mit in Einschubposition befindlichem Element im Teilschnitt,
- Fig. 6: eine Ansicht eines leistenförmigen Elements gemäß Fig. 4 mit durch eine Hüllfolie in Einschubposition gehaltenen diskreten Zungen,
- Fig. 7: ein Element mit trapezförmigen Zungen,
- Fig. 8: ein Element mit polygonförmig gestalteten Zungen.

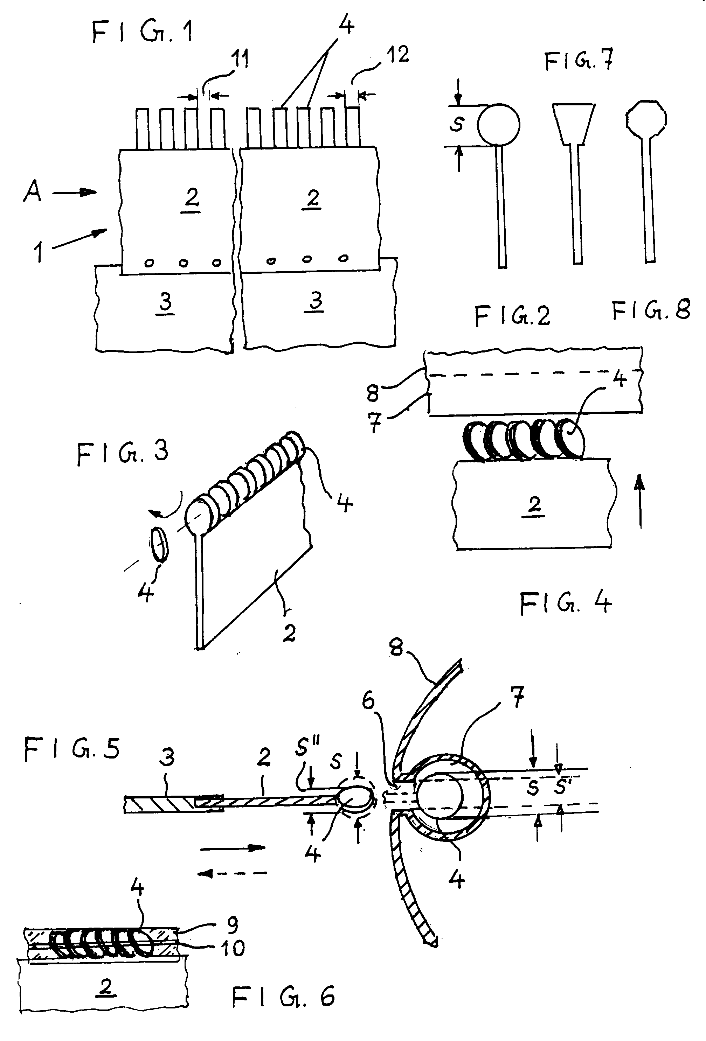

Wie aus den Figuren 1 bis 6 ersichtlich ist, besteht das leistenförmige Element 1 aus einem Tragteil 2 für ein an diesem befestigbaren Wandteil 3 aus verformbarem Flachmaterial oder aus einem festen Material sowie aus frontseitig vorgesehenen diskreten Zungen 4, die einen geeigneten Abstand voneinander aufweisen. Als Werkstoff für das Element 1 eignet sich je nach dem Verwendungszweck ein harter oder weicher Kunststoff, beispielsweise spritzfähiges Hart-oder Weich-PVC. Bei dem verwendeten Kunststoff ist wesentlich, daß die Zungen 4 rückstellelastisch sind, das heißt, vorübergehend in eine Position verschwenkbar sind, wie sie den Figuren 4 bis 6 entnehmbar sind, und daß die Zungen 4 nach dem Auslenken selbsttätig wieder in ihre Ausgangslage zurückgehen. Die Zungen 4 weisen in ihrer Normallage, das heißt, in ihrer Ausgangsposition vor dem Einschieben bzw. Einführen in den Öffnungsschlitz 6 der Längsnut 7 eines Aufnahmeteils 8, einen Durchmesser S auf, der größer bemessen ist als die lichte Weite S' des Öffnungsschlitzes 6 (siehe hierzu Fig. 5). In dieser Lage der Zungen 4 ist ein Einschieben oder Einführen der Zungen 4 des leistenförmigen Elements 1 in Pfeilrichtung durch den Öffnungsschlitz 6 des Aufnahmeteils 8 hindurch in die Längsnut 7 des Aufnahmeteils ausgeschlossen. Um dies zu ermöglichen, werden die jeweils durch einen Spalt 11 voneinander getrennten Zungen 4 seitlich in eine Lage verschwenkt, wie sie in den Figuren 4 und 5 veranschaulicht ist. Durch dieses Verschwenken der Zungen 4 des Elements 1 ist deren Resthöhe S'' kleiner als die Breite S' des Öffnungsschlitzes 6 im Aufnahmeteil 8. In dieser Lage der Zungen 4 können diese ungehindert in die Längsnut 7 des Aufnahmeteils 8 eingeführt bzw. eingeschoben werden. Das Wandteil 3 kann dabei bereits mit dem Element 1 vereinigt sein oder aber erst nach dessen Einschub in die Längsnut 7 des Aufnahmeteils 8 am Tragteil 2 des Elements 1 befestigt werden.

In der Einschublage des Elements 1 bzw. der Zungen bzw. Ansätze 4 des Elements 1 nehmen diese durch Rückfederung selbsttätig wieder ihre Ausgangslage (Normallage) ein, so daß ihre Höhe S die Breite S' des Öffnungsschlitzes 6 im Aufnahmeteil 8 überragt. Damit ist ein Herausziehen des Elements 1 bzw. der Zungen 4 des Elements quer zur Längsachse der Längsnut 7 in Richtung des gestrichelt gezeichneten Pfeils sicher verhindert. Hingegen kann das Element 1 in Richtung der Längsachse der Längsnut 7 aus dieser herausgezogen werden. Um ein seitliches Verrutschen des Elements 1 und damit des an diesem befestigten Wandteils 3 in der Einschublage des Elements zu verhindern, wird dieses zweckmäßigerweise an seinen beiden Enden am Aufnahmeteil 8 fixiert, beispielsweise mittels Schrauben oder dergleichen Haltemittel. Zur Vereinfachung des Einschubvorgangs können die Zungen 4 des Elements 1 anstatt manuell oder mit einer Umlenkhilfe mittels einer Umhüllung 9 aus einer geeigneten Folie in der Einschublage gehalten sein, wie dies Figur 6 schematisch veranschaulicht. Die Umhüllung 9 kann dabei nach dem Einführen der Zungen 4 des Elements 1 in die Längsnut 7 des Aufnahmeteils 8 durch einen Aufreißfaden 10 oder dgl. vom Element bzw. von den Zungen 4 entfernt werden, so daß die Zungen 4 in ihre Normallage zurückgehen können und damit die Sperrlage einnehmen. Anstelle einer Umhüllung 9 kann auch ein Klebestreifen zur Fixierung der Zungen 4 in der Einschublage verwendet werden. Die Festhaltemittel für die Zungen 4 in deren den Einschub in die Längsnut 7 des Aufnahmeteils 8 ermöglichenden Lage können dabei bereits während der Anfertigung des Elements 1 oder unmittelbar danach angebracht werden.

Die Zungen 4 des Elements 1 können jede geeignete Form besitzen, beispielsweise, wie die Figuren 7 und 8 zeigen, trapezförmig, polygonartig oder ähnlich ausgebildet sein.

Durch entsprechende Wahl des Abstandes 11 der einzelnen Zungen 4 voneinander läßt sich deren Einschubhöhe S" nahezu bis auf die Stärke 12 einer Zunge 4 reduzieren. Dadurch können die Zungen 4 und damit das Element 1 auch in extrem enge Öffnungsschlitze 6 im Aufnahmeteil 8 eingeführt werden. Die Zungen 4 können bezogen auf ihre Ausgangs-bzw. Normallage entweder linksherum oder rechtsherum verdreht bzw. verschwenkt werden. In Figur 3 ist eine in die Einschubposition linksherum verschwenkte Zunge 4 veranschaulicht.

Das erfindungsgemäße Element eignet sich insbesondere auch als Keder für rohrförmig oder ähnlich gestaltete Aufnahmeteile, wie sie beispielsweise bei Markisen Anwendung finden.

Als Hilfe für das Umlenken der diskreten Zungen 4 kann beispielsweise ein spatel-oder brieföffnerförmiges Bauteil verwendet werden, das in den Öffnungsschlitz 6 der Längsnut 7 des Aufnahmeteils 8 einführbar ist und die Zungen 4 durch Seitwärtsbewegung in die Einschublage umlenkt.

## Patentansprüche

1. Leistenförmiges, mit einem eine hinterschnittene Längsnut aufweisenden Aufnahmeteil kombinierbares Element, wobei das Aufnahmeteil mit einem öffnungsschlitz für das front seitige Einführen des Elements in die Längsnut versehen ist und das Element nach dem Einführvorgang eine Sperrlage einnimmt, die ein Herausziehen des Elements aus der Längsnut quer zu deren Längserstreckung sicher verhindert, dadurch gekennzeichnet, daß das leistenförmige Element (1) an seiner dem Öffnungsschlitz (6) des Aufnahmeteils (8) zugewandten Stirnseite jeweils durch einen Schlitz (11) voneinander beabstandete, gegen Torsion rückstellelastische Zungen (4) enthält, die in ihrer Normallage eine Breite (S) aufweisen, die größer ist als die Breite (S') des Öffnungsschlitzes (6) der Längsnut (7) des Aufnahmeteils (8), und daß die Zungen (4) in eine den frontalen Einschub in die Längsnut (7) ermöglichende Lage verdrehbar sind, aus der sie nach Beendigung des Einschubvorgangs selbsttätig in ihre Sperrlage gelangen, und daß das in der Sperrlage befindliche Element (1) in Richtung der Längsachse des Aufnahmeteils (8) aus der Längsnut (7) herausziehbar ist.

2. Leistenförmiges Element nach Anspruch 1, dadurch gekennzeichnet, daß die Zungen (4) des Elements (1) bezogen auf ihre Normallage sowohl nach links als auch nach rechts verschwenkbar sind.

3. Leistenförmiges Element nach Anspruch 1 oder 2, dadurch gekennzeichnet, daß die Zungen (4) manuell verdrehbar sind.

4. Leistenförmiges Element nach Anspruch 1 oder 2, dadurch gekennzeichnet, daß die diskreten Zungen (4) mittels einer Folienumhüllung (9) in der Einschublage gehalten sind, wobei die Folienumhüllung (9) beim oder nach dem Einschieben des Elements (1) in die Längsnut (7) des Aufnahmeteils (8) entfernbar ist.

5. Leistenförmiges Element nach Anspruch 4, dadurch gekennzeichnet, daß die Folienumhüllung (9) mit einem Aufreißfaden (10) versehen ist.

6. Leistenförmiges Element nach Anspruch 1 oder 2, dadurch gekennzeichnet, daß die diskreten Zungen (4) durch ein spatel-oder brieföffnerförmiges Bauteil in die Einschublage umlenkbar sind.

7. Leistenförmiges Element nach einem der vorhergehenden Ansprüche, dadurch gekennzeichnet, daß die diskreten Zungen (4) scheibchenförmig ausgebildet sind.

8. Leistenförmiges Element nach einem der vorhergehenden Ansprüche, dadurch gekennzeichnet, daß die diskreten Zungen (4) trapezförmig gestaltet sind.

9. Leistenförmiges Element nach einem der vorhergehenden Ansprüche, dadurch gekennzeichnet, daß die diskreten Zungen (4) Polygonform aufweisen.

10. Leistenförmiges Element nach einem der vorhergehenden Ansprüche, dadurch gekennzeichnet, daß es mit einem Tragteil (2) für ein an diesem befestigbaren Wandteil (3) aus verformbarem Flachmaterial oder aus einem festen Material versehen ist.

## Claims

1. Element forming a guiding strip to fix together wall parts connectable by said element in the recessed longitudinal channel of an anchoring part which presents an open slit, where the slit is intended for introducing the element into the longitudinal channel from the front and the element, having been fully introduced, assumes a locking position which safely prevents the element from being pulled out of the longitudinal channel in a direction transverse to its longitudinal extension, characterized in that the strip-like element (1) is provided on its end facing the open slit (6) of the anchoring part (8) with tongues (4) which are resilient to torsion, are spaced one from the other by a slit (11) and which in their normal position exhibit a width (S) larger than the width (S') of the open slit (6) of the longitudinal channel (7) of the anchoring part (8), and that the tongues (4) can be twisted into a position in which they can be introduced into the longitudinal channel (7) from the front and from which they are automatically transferred to their locking position upon completion of the introduction process, and that in its locking position the element (1) ) can be pulled out from the longitudinal channel (7) in the direction of the longitudinal axis of the anchoring part (8).

2. Element forming a guiding strip according to claim 1, characterized in that the tongues (4) of the element (1) can be swung both to the left and to the right, relative to their normal position.

3. Element forming a guiding strip according to claim 1 or 2, characterized in that the tongues (4) can be twisted manually.

4. Element forming a guiding strip according to claim 1 or 2, characterized in that the discrete tongues (4) are held in their inserted position by means of a film covering (9), the film covering (9) being removable during or after insertion of the element (1) into the longitudinal channel (7) of the anchoring part (8).

5. Element forming a guiding strip according to claim 4, characterized in that the film covering (9) is provided with a tear thread (10).

6. Element forming a guiding strip according to claim 1 or 2, characterized in that the discrete tongues (4) can be deflected to their insertion position by an element in the form of a spatula or a letter opener.

7. Element forming a guiding strip according to any of the preceding claims, characterized in that the discrete tongues (4) take the form of small disks.

8. Element forming a guiding strip according to any of the preceding claims, characterized in that the discrete tongues (4) exhibit a trapezoidal shape.

9. Element forming a guiding strip according to any of the preceding claims, characterized in that the discrete tongues (4) exhibit a polygonal shape.

10. Element forming a guiding strip according to any of the preceding claims, characterized in that it is provided with a supporting element (2) for a wall element (3), made of deformable flat stock or of a strong material, that can be fastened thereon.

## Revendications

1. Elément en forme de baguette pouvant être combiné avec une partie formant logement qui présente une rainure longitudinale pourvue d'une contre-dépouille, cependant que la partie formant logement est pourvue d'une fente ouverte destinée à l'introduction frontale de l'élément dans la rainure longitudinale, et que l'élément prend après l'opération d'introduction une position de verrouillage qui empêche d'une manière sûre de retirer l'élément de la rainure longitudinale transversalement par rapport à l'étendue de celle-ci dans le sens longitudinal, caractérisé par le fait que l'élément en forme de baguette (1) comprend, sur son côté frontal qui est tourné vers la fente ouverte (6) de la partie formant logement (8), des languettes (4) qui sont séparées chacune les unes des autres par une fente (11), qui sont rappelées élastiquement en torsion et qui présentent dans leur position normale une largeur (S) supérieure à la largeur (S') de la fente ouverte (6) de la rainure longitudinale (7) de la partie formant logement (8), par le fait que les languettes (4) peuvent être tordues pour prendre une position qui permet leur enfoncement frontal dans la rainure longitudinale (7) et depuis laquelle elles arrivent automatiquement dans leur position de verrouillage après la fin de l'opération d'enfoncement, et par le fait que l'élément (1) qui se trouve dans la position de verrouillage peut être retiré de la rainure longitudinale (7) dans la direction de l'axe longitudinal de la partie formant logement (8).

2. Elément en forme de baguette selon la revendication 1, caractérisé par le fait que l'on peut faire pivoter les languettes (4) de l'élément (1) tant vers la droite que vers la gauche à partir de leur position normale.

3. Elément en forme de baguette selon la revendication 1 ou 2, caractérisé par le fait que les languettes (4) peuvent être tordues à la main.

4. Elément en forme de baguette selon la revendication 1 ou 2, caractérisé par le fait que les languettes discrètes (4) sont maintenues dans la position d'enfoncement au moyen d'une gaine en feuille (9), cependant que la gaine en feuille (9) peut être enlevée lors de l'enfoncement de l'élément (1) dans la rainure longitudinale (7) de la partie formant logement (8) ou après cet enfoncement.

5. Elément en forme de baguette selon la revendication 4, caractérisé par le fait que la gaine en feuille (9) est pourvue d'un fil (10) destiné à la déchirer.

6. Elément en forme de baguette selon la revendication 1 ou 2, caractérisé par le fait que les languettes discrètes (4) peuvent être amenées par pivotement dans leur position d'enfoncement au moyen d'un organe en forme de spatule ou de coupe-papier.

7. Elément en forme de baguette selon l'une des revendications précédentes, caractérisé par le fait que les languettes discrètes (4) sont réalisées en forme de pastilles.

8. Elément en forme de baguette selon l'une des revendications précédentes, caractérisé par le fait que les languettes discrètes (4) sont réalisées en forme de trapèzes.

9. Elément en forme de baguette selon l'une des revendications précédentes, caractérisé par le fait que les languettes discrètes (4) présentent la forme de polygones.

10. Elément en forme de baguette selon l'une des revendications précédentes, caractérisé par le fait qu'il est pourvu d'une partie formant support (2) destinée à une partie de cloison (3) qui peut être fixée à celle-ci et qui est constituée par un matériau plat déformable ou par un matériau solide.
